# EUROPEAN PATENT SPECIFICATION

(11) **EP 1 885 814 B1**
(45) Date of publication and mention of the grant of the patent: **27.05.2009**
(21) Application number: 06777231.9
(22) Date of filing: 22.05.2006
(51) Int. Cl.: C09J 7/02, C09J 153/02

(54) **STYRENE BUTADIENE STYRENE BLOCK COPOLYMER BASED ADHESIVE COMPOSITIONS WITH IMPROVED PHOTO-OXIDATION RESISTANCE**
STYREN-BUTADIEN-STYREN-BLOCK-COPOLYMER AUF BASIS VON HAFTZUSAMMENSETZUNGEN MIT ERHÖHTER LICHTOXIDATIONS-RESISTENZ
COMPOSITIONS D' ADHESIFS A BASE DE COPOLYMERE BLOC STYRENE BUTADIENE STYRENE PRESENTANT UNE RESISTANCE AMELIOREE A LA PHOTO-OXYDATION

(30) Priority: 30.05.2005 EP 05104624
(43) Date of publication of application: 13.02.2008
(73) Proprietor: Ciba Holding Inc., 4057 Basel (CH)
(72) Inventor: MÄDER, Dietmar, 61440 Oberursel (DE); KNOBLOCH, Gerrit, CH-4312 Magden (CH)
(86) International application number: PCT/EP2006/062481
(87) International publication number: WO 2006/128799

(56) References cited:
- US-A- 3 239 478
- PATENT ABSTRACTS OF JAPAN vol. 014, no. 188 (C-0710), 17 April 1990 (1990-04-17) & JP 02 032182 A (SEKISUI CHEM CO LTD), 1 February 1990 (1990-02-01)
- GEUSKENS G.; MC FARLANE, D.M.: "Study of some parameters responsible for the efficiency of hindered amine light stabilizers" J. VINYL & ADD. TECHNOLOGY, vol. 5, no. 4, December 1999 (1999-12), pages 186-194, XP001207355
- KRATON POLYMERS: "KRATON POLYMERS: DRIVING INNOVATION IN PRESSURE SENSITIVE ADHESIVES" FACT SHEET, September 2004 (2004-09), pages K1-K20, XP002346085
- KNOBLOCH, G.: "Light stabilisation of Pressure Sensitive Adhesives" INTERNATIONAL PAPERWORLD, June 1998 (1998-06), pages 58-64, XP009054157 cited in the application

## Description

The instant invention relates to butadiene based pressure sensitive adhesive compositions with improved photo-oxidation resistance containing N-methyl substituted sterically hindered amines as stabilizers. Further aspects of the invention are a process for the stabilization of butadiene based pressure sensitive adhesive compositions and the use of N-methyl substituted sterically hindered amines as stabilizers for butadiene based pressure sensitive adhesives.

Pressure sensitive adhesives (PSA) have been used to bond a variety of materials to many substrates. A pressure-sensitive adhesive is an adhesive that retains high surface tackiness over time. In other words, a PSA has a theoretically infinite open time. The bonding force of the PSA is derived from the ability of the adhesive to be compatible with the surface of both the substrate and the bonded materials. The adhesive bond arises from the compatibility of the adhesive mass with both the object and the substrate and the internal cohesiveness of the adhesive mass. Any change in the nature of the adhesive materials can have a large effect on bond strength and the cohesiveness of the adhesive. Any substantial degradation of the adhesive materials can cause loss of bond strength. Further, adhesive bond strength is reduced by contamination of the adhesive material or interference between surfaces at the interface between the adhesive bond and the adjacent surface.

The degradation of the adhesive mass and the resulting bond can be caused by electromagnetic radiation such as visible and ultraviolet light. The radiation degrades the polymer species in the adhesive, increases brittleness or substantially inducse charring.

Many hot melt pressure sensitive adhesive formulations are based on a wide variety of thermoplastic elastomers (TPE's) including SIS, SBS, SEBS and SEPS where the S represents a styrene block, I is a polyisoprene block, B is a polybutadiene block, EB is an ethylene/butylene block and lastly EP is a polyethylene/propylene block. Numerous compositions based on these elastomers have been suggested in the patent and general technical literature. Compositions have been designed for indoor and outdoor use. When outdoor use is envisaged, durability and resistance towards actinic radiation becomes a prerequisite.

The stabilization of a wide variety of SIS based pressure sensitive adhesives against the detrimental influence of actinic radiation has been described by Knobloch in IPW 6/98, pages 58-64. However styrene butadiene styrene (SBS) block copolymer based pressure sensitive adhesives are not disclosed.

JP 02-32182 describes the general use of sterically hindered amines and phenolic antioxidants for adhesives based on styrene butadiene block copolymers and ethylene-vinyl acetate copolymers. The document is, however, silent as to the type of useful sterically hindered amines. No specific compound is disclosed.

There is still a need for pressure sensitive adhesive compositions, which exhibit an excellent UV-stability when these adhesives are exposed to sunlight, UV-Light, especially when applied to outdoor applications.

Surprisingly it has been found, that particularly SBS based pressure sensitive adhesives can be excellently stabilized against the detrimental influence of actinic radiation by the addition of sterically hindered amines with a molecular weight below 800 g/mol and a N-methyl substitution. The stabilized pressure sensitive adhesive compositions retain their tackiness over a longer time and exhibit significantly lower discoloration as compared to prior art stabilized compositions.

One aspect of the invention is a pressure sensitive adhesive composition comprising
a) a styrene butadiene styrene block copolymer and
b) a sterically hindered amine light stabilizer with a molecular weight of less than 800 g/mol having a structural element of formula (I) 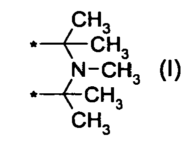 wherein * denotes a valence. (Anspruch 1)

Pressure sensitive adhesives typically comprise a block copolymer, a tackifying resin and optionally a plasticizing oil. The block copolymer provides flexibility, integrity and smooth peel adhesion properties. It also further provides a medium for dissolution or suspension of the tackifying resin and the plasticizing oil. The tackifying resin enhances tack properties and adhesion and reduces viscosity and the plasticizing oil reduces peel values, viscosities, glass transition temperatures and storage modulus (G'), and increases flexibility. The low ultimate peel value and lower peel adhesion of a removable adhesive is achieved through the use of higher polymer and plasticizing oil concentrations and lower tackifying resin concentrations in the adhesive.

There are many requirements that must be met in the development of pressure sensitive adhesives including low viscosities at application temperatures, heat resistance, good cold temperature flexibility, good adhesion to the base substrate, high resistance to bleeding or staining of substrates and good quick tack or quick stick. The difficulty in formulating such adhesives is achieving a good balance of desirable properties without sacrificing one property for another.

Typical block copolymers used for pressure sensitive adhesives are thermoplastic elastomers (TPE's) including SIS, SBS, SEBS and SEPS where the S represents a styrene block, I is a polyisoprene block, B is a polybutadiene block, EB is an ethylene/butylene block and lastly EP is a polyethylene/propylene block. It is required for the instant invention, that the pressure sensitive adhesive composition comprises a SBS block copolymer. For example the composition contains at least 50% by weight of an SBS block copolymer, based on the weight of the total block copolymers, preferably it is 100% by weight of an SBS block copolymer.

In other words, the pressure sensitive adhesive composition contains no other block copolymer than a styrene butadiene styrene (SBS) block copolymer.

SBS block copolymers are known in the art and commercially available in various grades, for example under the trade name Kraton (RTM). Typical examples and their preparation are described in EP 1 331 258.

The tackifying resins useful to the present invention can be selected from a wide range of commercially available resins. These include aliphatic, cycloaliphatic and aromatic hydrocarbon resins, modified hydrocarbons and terpenes, modified terpenes, rosins and modified rosins. The softening point of these resins is preferably less than about 120° C., more preferably less than about 110° C. and particularly between 80 °C and 110 °C. These tackifying resins are generally commercially available with differing levels of hydrogenation. It should be noted that there are numerous types of rosins and modified rosins with differing levels of hydrogenation including gum rosins, wood rosins, tall-oil rosins, distilled rosins, dimerized rosins and polymerized rosins. Some specific modified rosins include glycerol and pentaerythritol esters of wood rosins and tall-oil rosins.

Pressure sensitive adhesive formulations can be prepared by solution blending, usually at ambient temperature, by melt mixing or by extrusion at temperatures up to 200° C.

The pressure sensitive adhesive formulation is applied onto a carrier foil by well-known coating technologies.

The sterically hindered amine, component b) of the composition is preferably present in an amount of 0.01 to 5 %, in particular 0.1 to 2% by weight, based on the weight of the total composition.

Preferred is a pressure sensitive adhesive composition wherein the sterically hindered amine is bis(1,2,2,6,6-pentamethyl-4-piperidyl)sebacate or bis(1,2,2,6,6-pentamethylpiperidyl)-2-n-butyl-2-(2-hydroxy-3,5-di-tert-butylbenzyl)malonate.

The sterically hindered amines are commercially available, for example, from Ciba Specialty Chemicals Inc. Useful for the instant invention are in particular, Tinuvin 765® and Tinuvin 144®.

In a specific embodiment the pressure sensitive adhesive composition contains aditionally a UV-absorber selected from the group of hydroxybenzotriazoles, hydroxyphenyltriazines, oxalic anilides and benzophenones.

Examples are given below.

### UV absorbers

2-(2'-Hydroxyphenyl)benzotriazoles, for example 2-(2'-hydroxy-5'-methylphenylybenzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotiazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 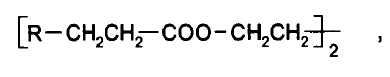 where R = 3'-tert-butyl-4'-hydroxy-5'-2H-benzotriazol-2-ylphenyl, 2-[2'-hydroxy-3'-(a,a-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]benzotriazole.

2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

Esters of substituted and unsubstituted benzoic acids, for example 4-tert-butyl-phenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate, N-(β-carbomethoxy-β-cyanovinyl)-2-methylindoline, neopentyl tetra(α-cyano-β,β-diphenylacrylate.

Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine, 2,4-bis(4-[2-ethylhexyloxy]-2-hydroxyphenyl)-6-(4-methoxyphenyl)-1,3,5-triazine.

Preferred is a pressure sensitive adhesive composition wherein the UV-absorber is of formula 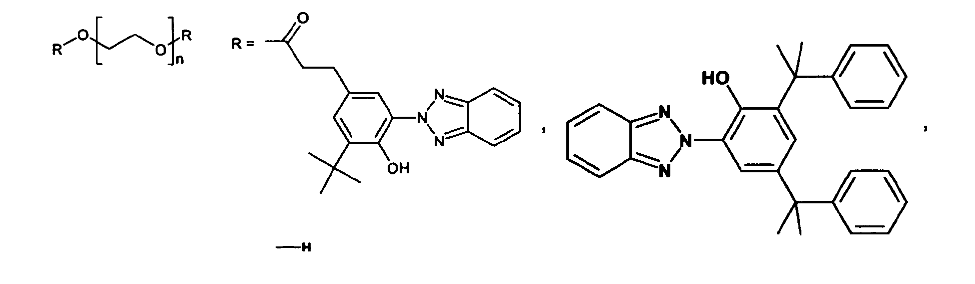 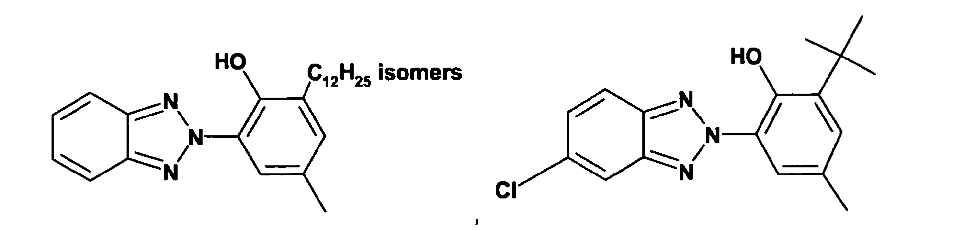 or

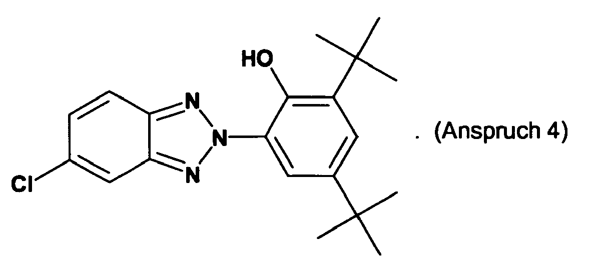

The UV-absorber is preferably present in an amount of from 0,01 to 5 %, in particular 0,1 to 2% by weight, based on the weight of the total composition.

Of particular value is a pressure sensitive adhesive composition wherein the sterically hindered amine is bis(2,2,6,6-tetramethyl-4-piperidyl)sebacate and additionally a UV-absorber is present, which is of formula 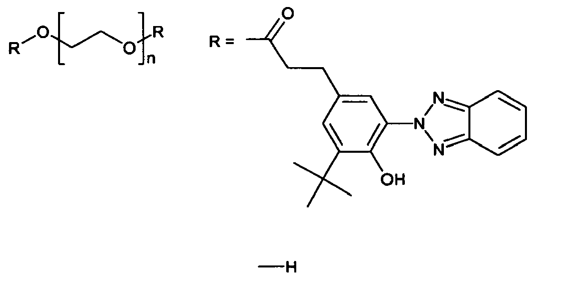 or

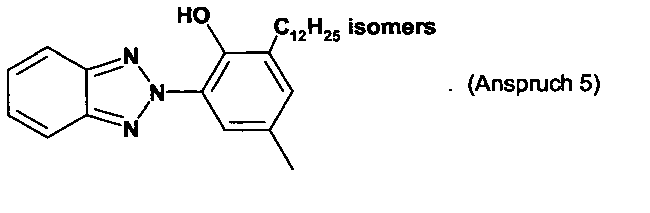

Also useful is a pressure sensitive adhesive composition wherein the sterically hindered amine is bis(1,2,2,6,6-pentamethylpiperidyl)-2-n-butyl-2-(2-hydroxy-3,5-di-tert-butylbenzyl)-malonate and additionally a UV-absorber is present, which is of formula

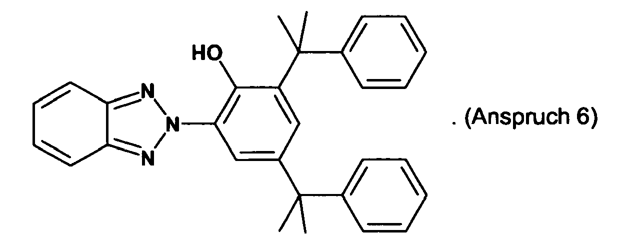

The UV-absorbers mentioned above are in its majority items of commerce and are sold, for example, by Ciba Specialty Chemicals Inc. under the trade name Tinuvin (RTM). Particular useful commercial compounds are Tinuvin 213®, Tinuvin 234®, Tinuvin 571®, Tinuvin 326® and Tinuvin 327®. Special preference is given to Tinuvin 571®, Tinuvin 213® and Tinuvin 234®. It is understood that also mixtures of the above mentioned UV-absorbers, including different classes, can be used.

The pressure sensitive adhesive composition may additionally comprise a sterically hindered phenolic antioxidant, an alkylthiomethylphenol or a phosphite or phosphonite or combinations thereof. Examples are given below. (Anspruch 7)

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol, the reaction product of p-nonyl phenol, dodecanethiol and formaldehyde (Wingstay K), an octyl thiomethylated styrenated phenol (Kumanox 3010).
1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
1.4. Tocopherols, for example α-tocopherol, β-tocopherol, γ-tocopherol, δ-tocopherol and mixtures thereof (vitamin E).
1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.
1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(a-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy2-methylphenyl)-4-n-dodecylmercaptobutane, 1,1,5,5-tetra-(5-tert-butyl-4-hydroxy-2-methylphenyl)pentane.
1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
1.8. Hydroxvbenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bis (3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
1.12. Acylaminophenols, for example 4-hydroxylauranilide, 4-hydroxystearanilide, octyl N-(3,5-di-tert-butyl-4-hydroxyphenyl)carbamate.
1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.
1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®}XL-1, supplied by Uniroyal).
1.18. Ascorbic acid (vitamin C)
1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-disec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-ctylphenothiazines, a mixture of mono- and dialkylated tert-octyl-phenothiazines, N-allylphenothiazine, N,N,N',N'-tetraphenyl-1,4-diaminobut-2-ene.
2. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.

The following phosphites are especially preferred:
Tris(2,4-di-tert-butylphenyl) phosphite (Irgafos^{®}168, Ciba Specialty Chemicals Inc.), tris(nonylphenyl) phosphite,

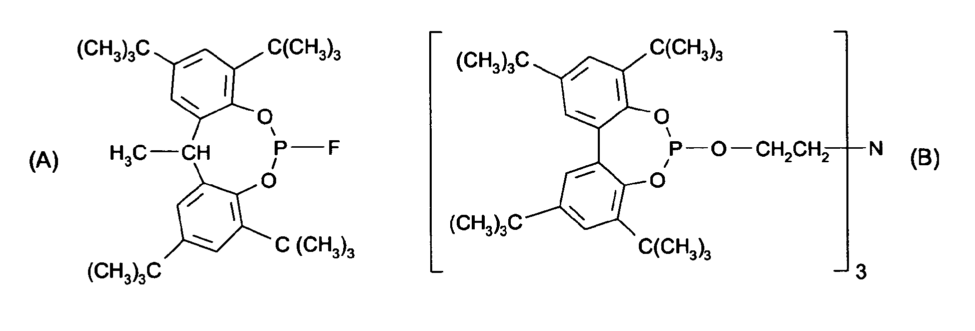

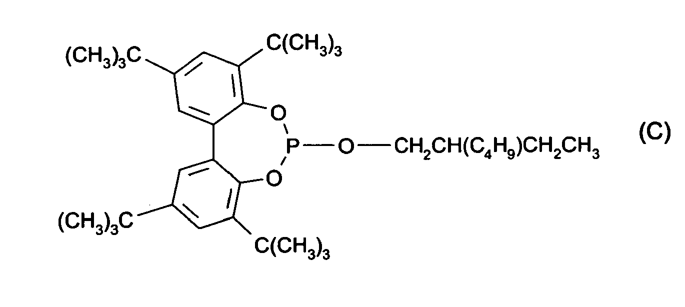

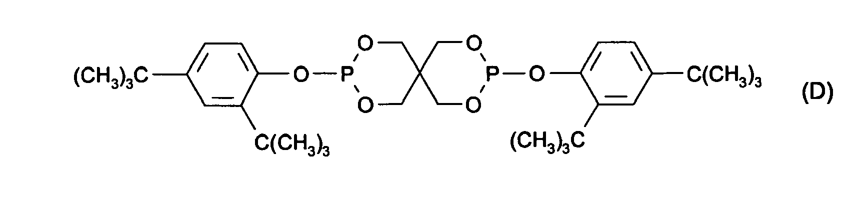

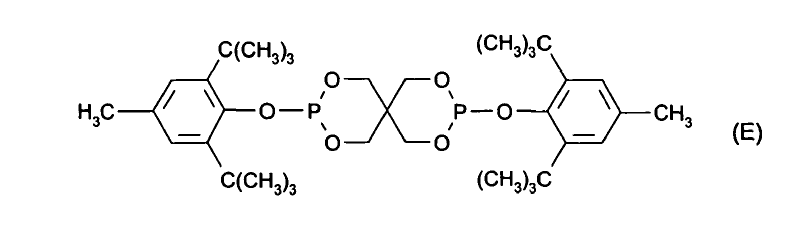

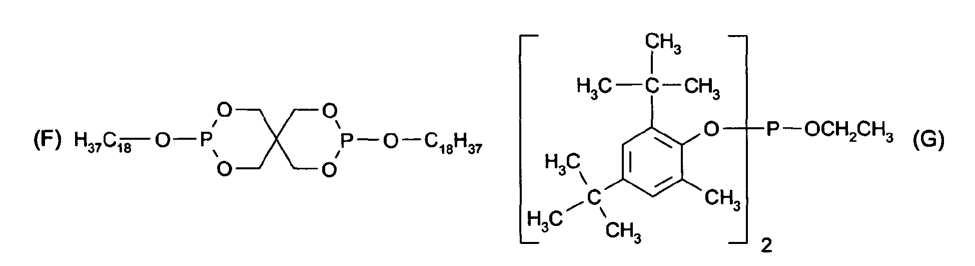

This further additives are preferably present in an amount from 0.01 to 1 %, in particular 0.1 to 0.5% by weight, based on the weight of the total composition.

A further aspect of the invention is a process for the stabilization of a pressure sensitive adhesive composition on the basis of a styrene butadiene styrene block copolymer comprising adding to the composition a sterically hindered amine light stabilizer with a molecular weight of less than 800 g/mol having a structural element of formula (I) 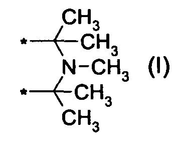 wherein * denotes a valence. (Anspruch 8)

Yet another aspect of the invention is the use of a sterically hindered amine light stabilizer with a molecular weight of less than 800 g/mol having a structural element of formula (I) 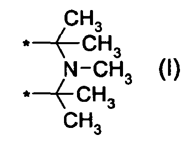 wherein * denotes a valence for the stabilization of a styrene butadiene styrene block copolymer based pressure sensitive adhesive. (Anspruch 9)

The definitions and preferences given above apply also for the other aspects of the invention.

The following examples illustrate the invention.

### Preparation and Testing

The SBS adhesive formulations are produced by dissolving
100 parts of SBS (Kraton® D 1102 CU, styrene content 29.5 wt% from KRATON POLYMER),
120 parts glycerol ester of fully hydrogenated rosin (Foral® 85-E from EASTMAN) and
25 parts paraffin oil (Marcol® 82 from BAYER) together with
1.23 parts of Irganox® 1726 in 163 parts of toluene as a solvent.
1.0 wt% of different light stabilizers - calculated with respect to SBS + tackifier resin + oil - are added to the solution.

### SBS-PSA Preparation

The solvent-based adhesives together with the light stabilizers are used for the preparation of SBS-based pressure sensitive adhesive (SBS-PSA). 3 g of each formulation (SBS-PSA / toluene (75 parts / 50 parts)) are poured into a glass petri dish (50 mm in diameter), and the solvent is evaporated. The final SBS-PSA film thickness is 0.8 mm. SBS-PSA-films are mounted onto a PET film for WOM exposure

### Artificial Weathering

The SBS-PSA films are exposed non-laminated, i.e. without release paper. Artificial weathering is done in a Weatherometer (WOM): xenon light exposure, black panel temperature 65 °C, 50 % r.h., 0.35 W/m² (340 nm) Suntest CPS+: xenon light exposure, black panel temperature 64 °C, 50 % r.h., 400 W/m² (300 - 800 nm) Reebok test device: equipped with a lamp Vitalux 300 (heated at 60 °C).

### Color Measurement

The color quality is reported in terms of Yellowness Index (YI), determined on the SBS-PSA samples in accordance with the ASTM 1926-70 Yellowness Test. Low YI values denote little discoloration, high YI values severe discoloration of the samples. The whiter the SBS-PSA the better the SBS adhesive is stabilized.

### Tack Measurement

The effectiveness criteria measured is tack in terms of finger tack retention. The higher the tack retention the better the SBS adhesive is stabilized.

The results are given in Tables 1-6.

**Table 1: Tack Retention - after WOM exposure of SBS-PSA Initial value 100 %)**

| No. | % | Light stabilizers | 0 h | 24 h | 48 h |
|---|---|---|---|---|---|
| Comparison A | - | Control (no LS) | 100% | 0% | 0 % |
| 1 | 1.0 % | Tinuvin 144 | 100 % | 100 % | 25-50 % |
| 2 | 1.0 % | Tinuvin 765 | 100 % | 100 % | 25-50 % |
| Comparison B | 1.0 % | Tinuvin 622 | 100 % | 0 % | 0 % |
| Comparison C | 1.0 % | Tinuvin 770 | 100 % | 50 % | Marginal tack |

| | | | | | |
|---|---|---|---|---|---|
| Comparison B is a sterically hindered amine with a molecular weight higher than 800 and a N-alkyl substitution. Comparison C is a sterically hindered amine with a molecular weight below 800 and a N-H substitution. | | | | | |

The inventive examples 1 and 2 clearly show the best tack retention.

**Table 2: Color Stability - after WOM exposure of SBS-PSA (measured according to ASTM 1926-70)**

| No. | % | Light stabilizers | 48 h | 72 h |
|---|---|---|---|---|
| Comparison A | - | Control (no LS) | 6.5 | 8.5 |
| 1 | 1.0 % | Tinuvin 144 | 3.9 | 4.5 |
| 2 | 1.0 % | Tinuvin 765 | 3.6 | 4.0 |
| Comparison B | 1.0 % | Tinuvin 622 | 6.3 | 8.7 |
| Comparison C | 1.0 % | Tinuvin 770 | 4.1 | 3.7 |

**Table 3: Tack Retention - after Suntest CPS+ exposure of SBS-PSA (Initial value 100 %)**

| No. | % | Light stabilizers | 0 h | 24 h | 48 h |
|---|---|---|---|---|---|
| Comparison A | - | Control (no LS) | 100 % | 0 % | 0 % |
| 1 | 1.0 % | Tinuvin 144 | 100 % | 100 % | 30-50 % |
| 2 | 1.0 % | Tinuvin 765 | 100 % | 100 % | 30-50 % |
| Comparison B | 1.0 % | Tinuvin 622 | 100 % | 0 % | 0 % |
| Comparison C | 1.0 % | Tinuvin 770 | 100 % | 100 % | 0 % |

**Table 4: Tack Retention - after exposure according to Reebok test device: Vitalux 300 (heated at 60 °C) of SBS-PSA (Initial value 100 %)**

| No | % | Light stabilizers | 0 h | 12 h | 24 h | 48 h | 72 h | 96 h |
|---|---|---|---|---|---|---|---|---|
| Comparison A | - | Control (no LS) | 100 % | 100 % | 0 % | 0 % | 0 % | 0 % |
| 1 | 1.0 % | Tinuvin 144 | 100 % | 100 % | 100 % | 100 % | 100 % | 40-60 % |
| 2 | 1.0 % | Tinuvin 765 | 100 % | 100 % | 100 % | 100 % | 100 % | 40-60 % |
| Comparison B | 1.0 % | Tinuvin 622 | 100 % | 100% | 0 % | 0% | 0 % | 0 % |
| Comparison C | 1.0 % | Tinuvin 770 | 100 % | 100 % | 100 % | 100 % | 10-30 % | 0 % |

## Claims

1. A pressure sensitive adhesive composition comprising
a) a styrene butadiene styrene block copolymer and
b) a sterically hindered amine light stabilizer with a molecular weight of less than 800 g/mol having a structural element of formula (I) 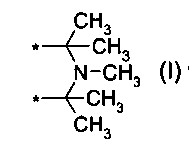 wherein * denotes a valence.

2. A pressure sensitive adhesive composition according to claim 1 wherein the sterically hindered amine is bis(1,2,2,6,6-pentamethyl-4-piperidyl)sebacate or bis(1,2,2,6,6-pentamethylpiperidyl)-2-n-butyl-2-(2-hydroxy-3,5-di-tert-butylbenzyl)malonate.

3. A pressure sensitive adhesive composition according to claim 1 wherein additionally a UV-absorber selected from the group of hydroxybenzotriazoles, hydroxyphenyltriazines, oxalic anilides and benzophenones is present.

4. A pressure sensitive adhesive composition according to claim 3 wherein the UV-absorber is of formula 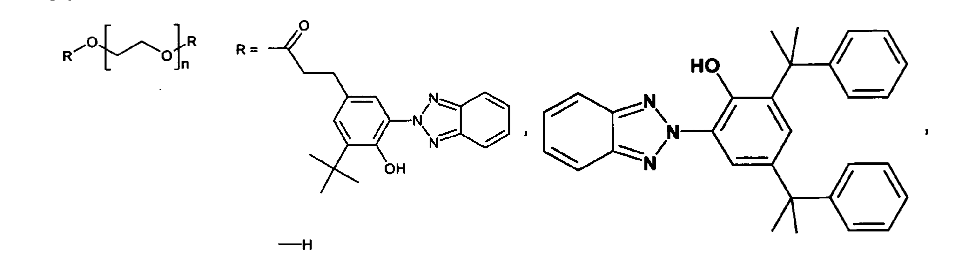 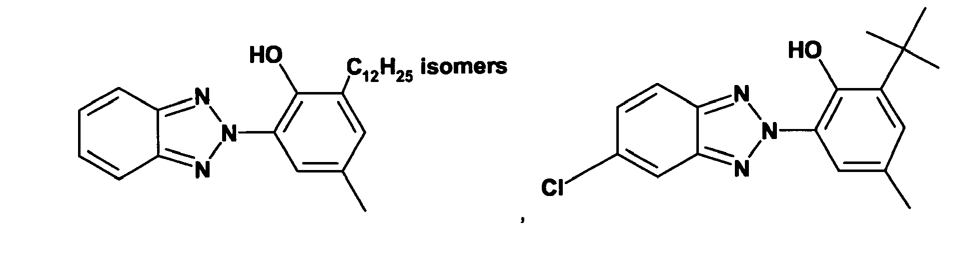 or

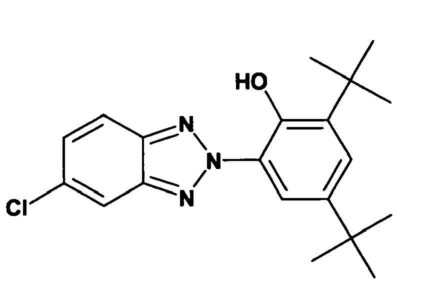

5. A pressure sensitive adhesive composition according to claim 1 wherein the sterically hindered amine is bis(2,2,6,6-tetramethyl-4-piperidyl)sebacate and additionally a UV-absorber is present, which is of formula 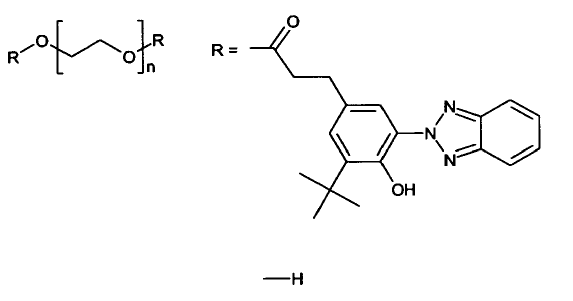 or

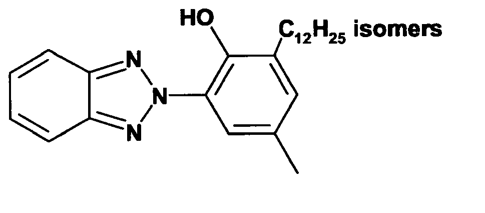

6. A pressure sensitive adhesive composition according to claim 1 wherein the sterically hindered amine is bis(1,2,2,6,6-pentamethylpiperidyl)-2-n-butyl-2-(2-hydroxy-3,5-di-tert-butylbenzyl)malonate and additionally a UV-absorber is present, which is of formula

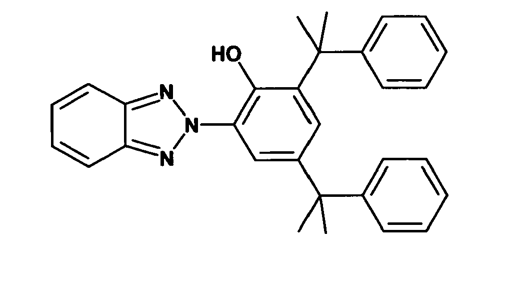

7. A pressure sensitive adhesive composition according to claim 1 which additionally comprises a sterically hindered phenolic antioxidant, an alkylthiomethylphenol or a phosphite or phosphonite or combinations thereof.

8. A process for the stabilization of a pressure sensitive adhesive composition on the basis of a styrene butadiene styrene block copolymer comprising adding to the composition a sterically hindered amine light stabilizer with a molecular weight of less than 800 g/mol having a structural element of formula (I) 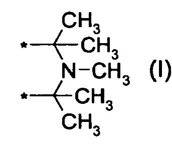 wherein * denotes a valence.

9. Use of a sterically hindered amine light stabilizer with a molecular weight of less than 800 g/mol having a structural element of formula (I) 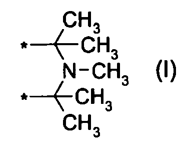 wherein * denotes a valence for the stabilization of a styrene butadiene styrene block copolymer based pressure sensitive adhesive.

## Patentansprüche

1. Haft-Klebstoff-Zusammensetzung, umfassend
a) ein Styrol-Butadien-Styrol-Block-Copolymer und
b) einen sterisch gehinderten Amin-Licht-Stabilisator mit einem Molekulargewicht von weniger als 800 g/Mol, der ein Strukturelement der Formel (I) 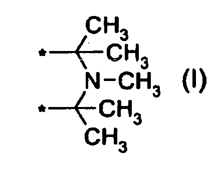 aufweist, worin * eine Valenz bedeutet.

2. Haft-Klebstoff-Zusammensetzung nach Anspruch 1, worin das sterisch gehinderte Amin Bis-(1,2,2,6,6-pentamethyl-4-piperidyl)-sebacat oder Bis-(1,2,2,6,6-pentamethylpiperidyl)-2-n-butyl-2-(2-hydroxy-3,5-di-tert-butylbenzyl)-malonat ist.

3. Haft-Klebstoff-Zusammensetzung nach Anspruch 1, worin zusätzlich ein UV-Absorptionsmittel, ausgewählt aus der Gruppe von Hydroxylbenzotriazolen, Hydroxylphenyltriazinen, Oxalsäureaniliden und Benzophenonen, vorliegt.

4. Haft-Klebstoff-Zusammensetzung nach Anspruch 3, worin das UV-Absorptionsmittel die Formel 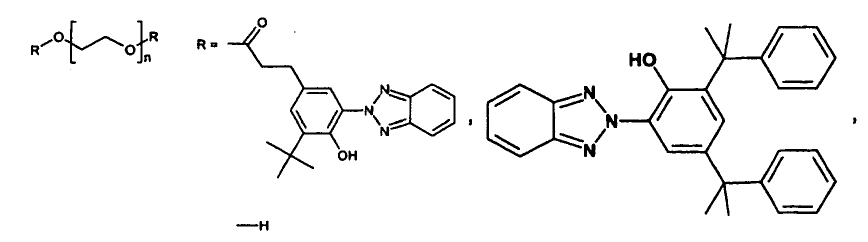 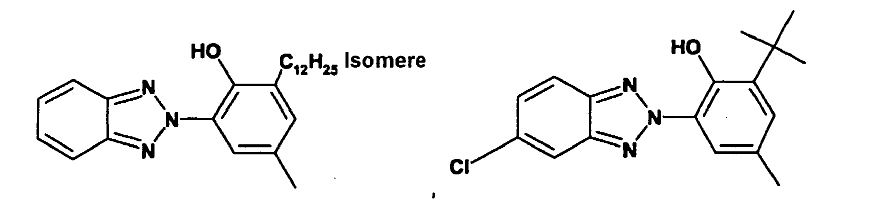 oder 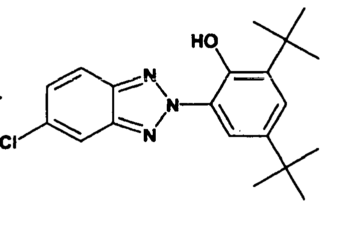 aufweist.

5. Haft-Klebstoff-Zusammensetzung nach Anspruch 1, worin das sterisch gehinderte Amin Bis-(2,2,6,6-tetramethyl-4-piperidyl)-sebacat ist und zusätzlich ein UV-Absorptionsmittel vorliegt, das die Formel 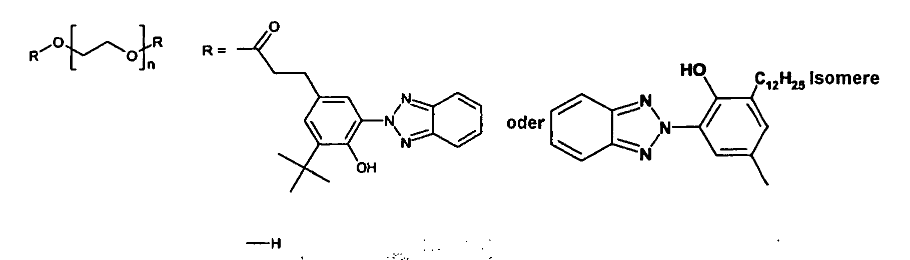 aufweist.

6. Haft-Klebstoff-Zusammensetzung nach Anspruch 1, worin das sterisch gehinderte Amin Bis-(1,2,2,6,6-pentamethylpiperidyl)-2-n-butyl-2-(2-hydroxy-3,5-di-tert-butylbenzyl)-malonat ist und zusätzlich ein UV-Absorptionsmittel vorliegt, das die Formel 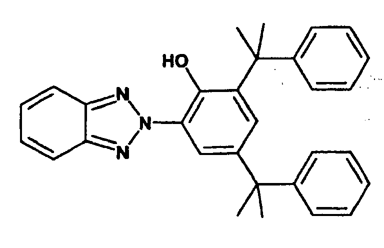 aufweist.

7. Haft-Klebstoff-Zusammensetzung nach Anspruch 1, die zusätzlich ein sterisch gehindertes phenolisches Antioxidans, ein Alkylthiomethylphenol oder ein Phosphit oder Phosphonit oder Kombinationen davon umfasst.

8. Verfahren für die Stabilisierung einer Haft-Klebstoff-Zusammensetzung auf der Grundlage von einem Styrol-Butadien-Styrol-Block-Copolymer, umfassend Zusetzen zu der Zusammensetzung eines sterisch gehinderten Amin-Licht-Stabilisators mit einem Molekulargewicht von weniger als 800 g/Mol, der ein Strukturelement der Formel (I) 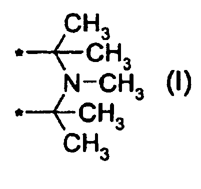 aufweist, worin * eine Valenz bedeutet.

9. Verwendung von einem sterisch gehinderten Amin-Licht-Stabilisator mit einem Molekulargewicht von weniger als 800 g/Mol, der ein Strukturelement der Formel (I) 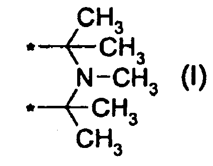 aufweist, worin * eine Valenz bedeutet, für die Stabilisierung von einem Haft-Klebstoff, der auf einem Styrol-Butadien-Styrol-Block-Copolymer basiert.

## Revendications

1. Composition adhésive sensible à la pression comprenant
a) un copolymère à blocs styrène butadiène styrène, et
b) un stabilisateur de la lumière amine avec encombrement stérique présentant un poids moléculaire inférieur à 800 g/mole et possédant un élément structurel de formule (I) 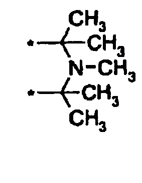 dans laquelle, * désigne une valence.

2. Composition adhésive sensible à la pression selon la revendication 1, **caractérisée en ce que** l'amine avec encombrement stérique est bis(1,2,2,6,6-pentaméthyl-4-pipéridyl)sébacate ou bis(1,2,2,6,6-pentaméthylpipéridyl)-2-n-butyl-2-(2-hydroxy-3,5-di-tert-butylbenzyl)malonate.

3. Composition adhésive sensible à la pression selon la revendication 1, **caractérisée en ce qu'**un absorbeur d'UV supplémentaire, sélectionné à partir du groupe composé d'hydroxybenzotriazoles, hydroxyphényltriazines, anilides oxaliques et benzophénones, est présent.

4. Composition adhésive sensible à la pression selon la revendication 3, **caractérisée en ce que** l'absorbeur d'UV est de formule 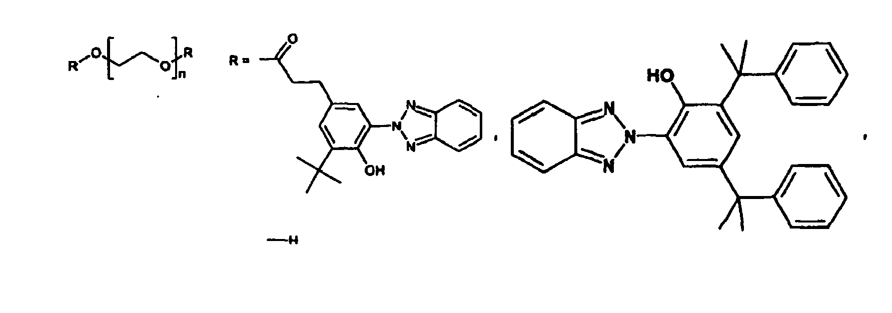 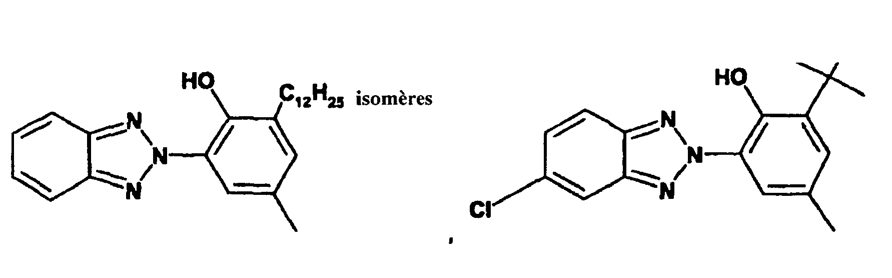 ou

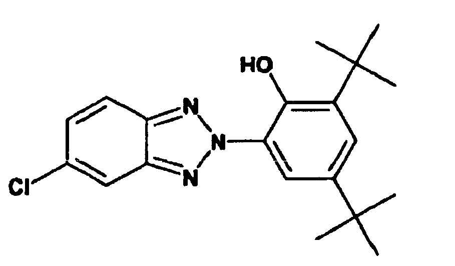

5. Composition adhésive sensible à la pression selon la revendication 1, **caractérisée en ce que** l'amine avec encombrement stérique est bis(2,2,6,6-tétraméthyl-4-pipéridyl)sébacate et **en ce qu'**un absorbeur d'UV supplémentaire est présent, ce dernier est de formule 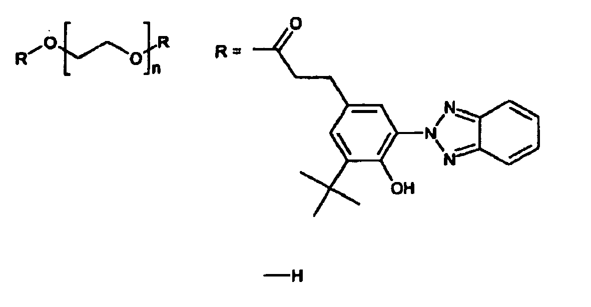 ou

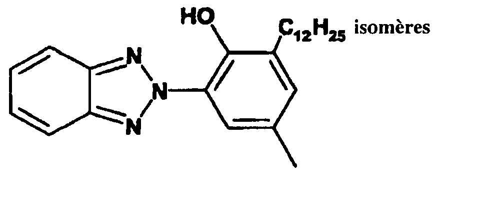

6. Composition adhésive sensible à la pression selon la revendication 1, **caractérisée en ce que** l'amine avec encombrement stérique est bis(1,2,2,6,6-pentaméthylpipéridyl)-2-n-butyl-2-(2-hydroxy-3,5-di-tert-butylbenzyl)malonate et **en ce qu'**un absorbeur d'UV supplémentaire est présent, ce dernier est de formule

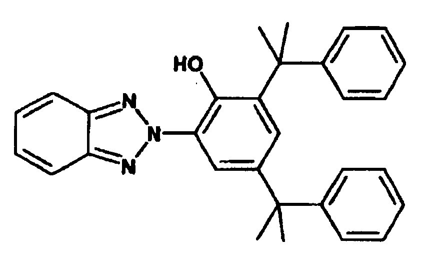

7. Composition adhésive sensible à la pression selon la revendication 1 qui comprend en plus un anti-oxydant phénolique avec encombrement stérique, un alkylthiométhylphénol ou un phosphite ou un phosphonite ou des combinaisons de ceux-ci.

8. Procédé de stabilisation d'une composition adhésive sensible à la pression sur base d'un copolymère à blocs styrène butadiène styrène qui consiste à ajouter à la composition un stabilisateur de la lumière amine avec encombrement stérique présentant un poids moléculaire inférieur à 800 g/mole et possédant un élément structurel de formule (I) 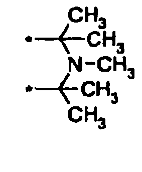 dans laquelle, * désigne une valence.

9. Utilisation d'un stabilisateur de la lumière amine avec encombrement stérique présentant un poids moléculaire inférieur à 800 g/mole et possédant un élément structurel de formule (I) 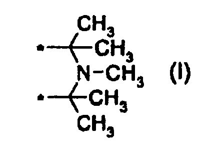 dans laquelle, * désigne une valence pour la stabilisation d'un adhésif sensible à la pression basé sur un copolymère à blocs styrène butadiène styrène.
